# EUROPEAN PATENT APPLICATION

(11) **EP 4 582 595 A1**
(43) Date of publication of application: **09.07.2025**
(21) Application number: 23860001.9
(22) Date of filing: 09.08.2023
(51) Int. Cl.: C25B 13/02, C25B 1/04, C25B 9/00, C25B 13/04, C25B 13/08

(54) **DIAPHRAGM FOR ALKALINE-WATER ELECTROLYSIS, ALKALINE-WATER ELECTROLYSIS CELL, AND METHOD OF ALKALINE-WATER ELECTROLYSIS**

(30) Priority: 01.09.2022 JP 2022139521
(71) Applicant: Nippon Shokubai Co., Ltd., Osaka-shi, Osaka 541-0043 (JP); NATIONAL UNIVERSITY CORPORATION YOKOHAMA NATIONAL UNIVERSITY, Yokohama-shi Kanagawa 240-8501 (JP)
(72) Inventor: NAKAYAMA, Shinya, Suita-shi, Osaka 564-0034 (JP); AKUTAGAWA, Hironobu, Suita-shi, Osaka 564-0034 (JP); MISAWA, Yuji, Suita-shi, Osaka 564-0034 (JP); MITSUSHIMA, Shigenori, Yokohama-shi, Kanagawa 240-8501 (JP); NAGASAWA, Kensaku, Yokohama-shi, Kanagawa 240-8501 (JP); KURODA, Yoshiyuki, Yokohama-shi, Kanagawa 240-8501 (JP); ABDELHALEEM, Ashraf, Yokohama-shi, Kanagawa 240-8501 (JP)
(74) Representative: Cabinet Beau de Loménie
(86) International application number: PCT/JP2023/029162
(87) International publication number: WO 2024/048235

(57) **Abstract**

The present invention aims to provide a diaphragm for alkaline water electrolysis that can increase the purity of the target product gas in alkaline water electrolysis. The present invention relates to a diaphragm for alkaline water electrolysis, including: a porous membrane containing an organic polymer resin and inorganic particles; and a porous support, the diaphragm for alkaline water electrolysis including an impregnated portion formed of the porous support impregnated with the porous membrane, the diaphragm for alkaline water electrolysis having a pair of main surfaces, the impregnated portion including a gap having a size of 0.5 to 10 µm between a porous membrane portion and a porous support portion, the diaphragm for alkaline water electrolysis having a gas permeability anisotropy that indicates a difference between a gas permeability from one to the other of the pair of main surfaces and a gas permeability from the other to the one of the pair of main surfaces.

## Description

### TECHNICAL FIELD

The present invention relates to diaphragms for alkaline water electrolysis, alkaline water electrolysis cells, and methods of alkaline water electrolysis.

### BACKGROUND ART

For realization of a low-carbon society, renewable energy produced from solar power generation, wind power generation, and the like has been introduced. However, the power generation from solar power generation, wind power generation, and the like is variable depending on weather conditions, leading to imbalance of demand and supply of electricity and excess electricity. To store and use such surplus electricity in the form of energy, "power-to-gas" technology is attracting an interest in recent years. This technology is specifically to convert surplus power into a gas fuel such as hydrogen or methane using water electrolysis.

A common method for obtaining hydrogen gas by water electrolysis is to apply a direct current to water containing sodium hydroxide, potassium hydroxide, or the like. This method is also called alkaline water electrolysis.

For alkaline water electrolysis, an alkaline water electrolysis cell is used which includes an anode chamber and a cathode chamber which are separated by a diaphragm (a diaphragm for alkaline water electrolysis). Since electrolysis is carried out by the transfer of electrons (or ions), the diaphragm needs to have high ion permeability to carry out electrolysis efficiently. The diaphragm also needs to have gas barrier properties of separating oxygen gas produced in the anode chamber and hydrogen gas produced in the cathode chamber. The diaphragm also needs to have high-temperature resistance and alkali resistance because alkaline water electrolysis uses an alkaline aqueous solution with a high concentration of about 30% and is carried out at about 80°C to 90°C.

In response to such problems, various diaphragms for alkaline water electrolysis have been proposed (for example, Patent Literatures 1 to 3).

### CITATION LIST

### - Patent Literature

Patent Literature 1: JP 2014-129563 A
Patent Literature 2: JP 2017-2389 A
Patent Literature 3: JP 2020-527193 T

### SUMMARY OF INVENTION

### - Technical Problem

Alkaline water electrolysis, as described above, produces oxygen gas in the anode chamber (anode) and hydrogen gas in the cathode chamber (cathode). These two gases are separated by a diaphragm disposed between the electrodes. Since the diaphragm has a porous structure, the gases permeate the diaphragm to a certain extent and mix with each other. From the viewpoints of resource utilization and safety, these two gases are desired to be recovered with high purity. In addition, depending on the application after recovery or operating conditions, it is desirable to increase the purity of a desired gas among the product gases.

The present invention has been made in consideration of the above-described current situation, and aims to provide a diaphragm for alkaline water electrolysis that can increase the purity of the target product gas in alkaline water electrolysis.

### - Solution to Problem

The present inventors have conducted various studies on a diaphragm for alkaline water electrolysis and developed a diaphragm for alkaline water electrolysis including a porous support and a porous membrane containing an organic polymer resin and inorganic particles, the diaphragm for alkaline water electrolysis including an impregnated portion formed of the porous support impregnated with the porous membrane, the impregnated portion including a gap having a specific size between a porous membrane portion and a porous support portion. The present inventors have found that such a diaphragm for alkaline water electrolysis has a gas permeability anisotropy that indicates a difference between the gas permeability from one to the other of a pair of main surfaces and the gas permeability from the other to the one of the pair of main surfaces. The present inventors have also found that, according to the present invention, owing to the gas permeability anisotropy, alkaline water electrolysis performed while adjusting the orientation of the diaphragm can increase the recovery rate of the target product gas and can provide the desired product gas with high purity. Thereby, the present invention has been completed.

Specifically, the present invention provides the following aspects.
(1) A diaphragm for alkaline water electrolysis, including:
   a porous membrane containing an organic polymer resin and inorganic particles; and
   a porous support,
   the diaphragm for alkaline water electrolysis including an impregnated portion formed of the porous support impregnated with the porous membrane,
   the diaphragm for alkaline water electrolysis having a pair of main surfaces,
   the impregnated portion including a gap having a size of 0.5 to 10 µm between a porous membrane portion and a porous support portion,
   the diaphragm for alkaline water electrolysis having a gas permeability anisotropy that indicates a difference between a gas permeability from one to the other of the pair of main surfaces and a gas permeability from the other to the one of the pair of main surfaces.
(2) A diaphragm for alkaline water electrolysis, including:
   a porous membrane containing an organic polymer resin and inorganic particles; and
   a porous support,
   the diaphragm for alkaline water electrolysis including an impregnated portion formed of the porous support impregnated with the porous membrane and a non-impregnated portion formed of the porous membrane not impregnated into the porous support,
   the diaphragm for alkaline water electrolysis having a pair of main surfaces,
   the impregnated portion defining one of the pair of main surfaces,
   the non-impregnated portion defining the other of the pair of main surfaces,
   the impregnated portion including, in the one main surface, a gap having a size of 0.5 to 10 µm between a porous membrane portion and a porous support portion.
(3) The diaphragm for alkaline water electrolysis according to (1) or (2),
   wherein a percentage of the gap between the porous membrane portion and the porous support portion in the surface of the diaphragm for alkaline water electrolysis is 1% or higher and 8% or lower.
(4) The diaphragm for alkaline water electrolysis according to any one of (1) to (3), including the non-impregnated portion formed of the porous membrane not impregnated into the porous support,
   wherein a thickness ratio of the non-impregnated portion to the impregnated portion [(thickness of non-impregnated portion)/(thickness of impregnated portion)] is 0.1 to 1.0.
(5) The diaphragm for alkaline water electrolysis according to any one of (1) to (4),
   wherein the organic polymer resin includes at least one selected from the group consisting of polysulfone, polyethersulfone, and polyphenylsulfone.
(6) The diaphragm for alkaline water electrolysis according to any one of (1) to (5),
   wherein the inorganic particles include at least one selected from the group consisting of zirconium oxide, titanium oxide, magnesium hydroxide, and barium sulfate.
(7) The diaphragm for alkaline water electrolysis according to any one of (1) to (6),
   wherein the porous support includes at least one resin selected from the group consisting of polypropylene, polyethylene, and polyphenylene sulfide.
(8) An alkaline water electrolysis cell including:
   an anode;
   a cathode; and
   the diaphragm for alkaline water electrolysis according to any one of (1) to (7) between the anode and the cathode.
(9) A method of alkaline water electrolysis,
   the method using the alkaline water electrolysis cell according to (8),
   the method including water electrolysis performed while adjusting an orientation of the diaphragm for alkaline water electrolysis according to a target gas among gases produced on an anode side and a cathode side.

### - Advantageous Effects of Invention

The diaphragm for alkaline water electrolysis of the present invention can increase the purity of the target product gas. The diaphragm for alkaline water electrolysis of the present invention also provides an alkaline water electrolysis cell and a method of alkaline water electrolysis that can efficiently increase the purity of the target product gas.

### BRIEF DESCRIPTION OF DRAWINGS

FIG. 1 shows a schematic cross-sectional view perpendicular to the main surfaces of an example of a diaphragm for alkaline water electrolysis of the present invention.
FIG. 2 shows an example of an observation image of an impregnated portion of the diaphragm obtained by SEM (1000× magnification) including line segments for measuring the gap size between a porous membrane portion and a porous support portion.
FIG. 3 shows an example of an observation image of an impregnated portion of the diaphragm obtained by SEM (200× magnification) for determining the percentage of gaps between the porous membrane portion and the porous support portion.

### DESCRIPTION OF EMBODIMENTS

The present invention is described in detail below. Any combination of two or more of the following preferred embodiments of the present invention is also a preferred embodiment of the present invention. Herein, the numerical range indicated as "X to Y" refers to the range of X or more and Y or less. For example, "0.5 to 10 µm" means 0.5 µm or more and 10 µm or less.

### 1. Diaphragm for alkaline water electrolysis

The diaphragm for alkaline water electrolysis of the present invention includes a porous membrane containing an organic polymer resin and inorganic particles; and a porous support, the diaphragm for alkaline water electrolysis including an impregnated portion formed of the porous support impregnated with the porous membrane, the diaphragm for alkaline water electrolysis having a pair of main surfaces, the impregnated portion including a gap having a size of 0.5 to 10 µm between a porous membrane portion and a porous support portion, the diaphragm for alkaline water electrolysis having a gas permeability anisotropy that indicates a difference between a gas permeability from one to the other of the pair of main surfaces and a gas permeability from the other to the one of the pair of main surfaces. In water electrolysis using such a diaphragm for alkaline water electrolysis of the present invention, the target product gas can be obtained with high purity by adjusting the orientation of the diaphragm for alkaline water electrolysis of the present invention according to the gas whose purity is to be increased.

The diaphragm for alkaline water electrolysis of the present invention has gas permeability anisotropy. The gas permeability anisotropy refers to a property indicating the difference between the gas permeability from one to the other of the pair of main surfaces of the diaphragm and the gas permeability from the other to the one of the pair of main surfaces. Specifically, the gas permeability anisotropy refers to a property indicating that the amount of hydrogen gas permeating the diaphragm for alkaline water electrolysis per unit time varies depending on the orientation of the diaphragm for alkaline water electrolysis, and also refers to a property indicating that the amount of oxygen gas permeating the diaphragm for alkaline water electrolysis per unit time varies depending on the orientation of the diaphragm for alkaline water electrolysis. As described above, the gas permeability of the diaphragm for alkaline water electrolysis varies depending on the orientation of the diaphragm. Thus, adjusting the orientation of the diaphragm depending on the product gas to be recovered enables recovery of the gas with high purity.

The diaphragm for alkaline water electrolysis of the present invention includes a porous support and a porous membrane containing an organic polymer resin and inorganic particles, and includes an impregnated portion formed of the porous support impregnated with the porous membrane and has a pair of main surfaces.

The porous membrane includes a portion formed of the porous support fully impregnated with the porous membrane and a portion consisting of the porous membrane present on one of the pair of main surfaces of the porous support. On the other of the pair of main surfaces of the porous support, the porous membrane and the porous support are approximately flush with each other. In such a configuration, the diaphragm for alkaline water electrolysis of the present invention includes an impregnated portion formed of the porous support impregnated with the porous membrane and a non-impregnated portion consisting of the porous membrane not impregnated into the porous support, and the impregnated portion defines one of the pair of main surfaces of the diaphragm and the non-impregnated portion defines the other of the pair of main surfaces.

The impregnated portion includes gaps having a size of 0.5 to 10 µm between the porous membrane portion and the porous support portion. The presence of gaps having a size within the above range between the porous membrane portion and the porous support portion in the impregnated portion provides gas permeability anisotropy. The size of each gap is preferably 1 to 8 µm, more preferably 2 to 7 µm, to further enhance the gas permeability anisotropy.

In other words, the diaphragm for alkaline water electrolysis of the present invention includes a porous support and a porous membrane containing an organic polymer resin and inorganic particles, the diaphragm for alkaline water electrolysis including an impregnated portion formed of the porous support impregnated with the porous membrane and a non-impregnated portion formed of the porous membrane not impregnated into the porous support, the diaphragm for alkaline water electrolysis having a pair of main surfaces, the impregnated portion defining one of the pair of main surfaces, the non-impregnated portion defining the other of the pair of main surfaces, the impregnated portion including, in the one main surface, a gap having a size of 0.5 to 10 µm between a porous membrane portion and a porous support portion. The diaphragm for alkaline water electrolysis of the present invention having such a configuration has gas permeability anisotropy that indicates a difference between the gas permeability from one to the other of the pair of main surfaces and the gas permeability from the other to the one of the pair of main surfaces.

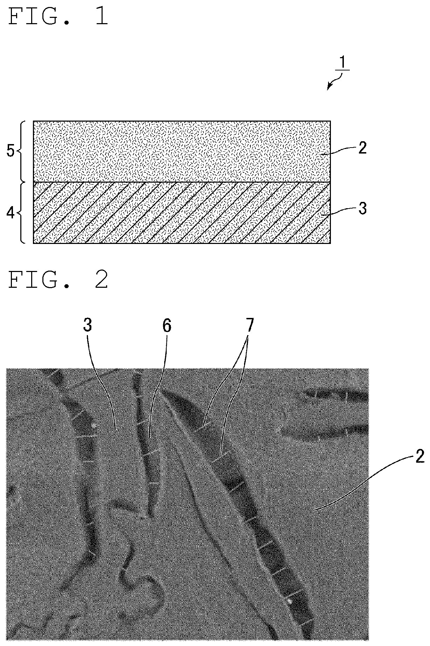

The size of gaps between the porous membrane portion and the porous support portion can be determined by scanning electron microscopy (SEM) observation. Specifically, first, 10 observation areas are randomly selected on the main surface defined by the impregnated portion of the diaphragm for alkaline water electrolysis. FIG. 1 shows a schematic cross-sectional view perpendicular to the main surface of an example of the diaphragm for alkaline water electrolysis of the present invention. In FIG. 1, a diaphragm 1 for alkaline water electrolysis includes a porous membrane 2 and a porous support 3. The porous membrane 2 includes an impregnated portion 4 formed of the porous support 3 impregnated with the porous membrane 2 and a non-impregnated portion 5 formed only of the porous membrane. The observation areas are selected in the impregnated portion 4. Next, the observation images of the observation areas are obtained by SEM at 1000× magnification. In each of the 10 observation images (10 fields of view), the sizes of gaps are measured using image analysis software (Image-Pro Premier, Media Cybernetics). The size of each gap is measured by drawing line segments at 10 µm intervals along the length of the fiber-like porous support portion. The line segments are drawn from the surface of the porous support portion to the surface of the porous membrane portion, perpendicular to the surface of the porous support portion. FIG. 2 shows a SEM observation image of one field of view including the line segments drawn as described above. Then, the lengths of the line segments are measured. The lengths of all the line segments are measured and averaged to determine a gap size in one field of view. The same process is carried out for 10 fields of view, and the sizes in the 10 fields of view are averaged to determine a gap size.

The percentage of gaps between the porous membrane portion and the porous support portion on the surface of the diaphragm for alkaline water electrolysis is preferably 1% to 8%. When the percentage of gaps is within the above range, excellent ion permeability and excellent gas permeability anisotropy can be obtained. To further enhance ion permeability and gas permeability anisotropy, the percentage of gaps is more preferably 2% to 7%, still more preferably 2.5% to 6.5%.

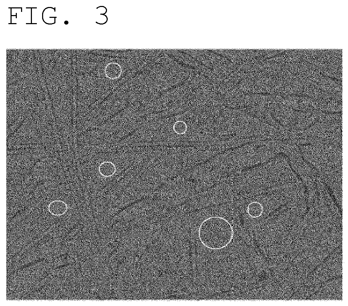

The percentage of gaps between the porous membrane portion and the porous support portion in the diaphragm for alkaline water electrolysis can be determined by the following method. Specifically, 10 observation areas are randomly selected on the main surface defined by the impregnated portion (the main surface with no non-impregnated portion) of the diaphragm for alkaline water electrolysis. The observation images of the observation areas are obtained by SEM at 200× magnification. In each of the 10 observation images (10 fields of view), the percentage of gaps is measured using image analysis software (Image-Pro Premier, Media Cybernetics). The specific procedures are as follows. (1) Gap portions and gap-free portions are visually recognized in the observation image (see FIG. 3). (2) Brightness levels of the gap portions are specified by hovering the cursor over the gap portions. (3) Brightness levels of the gap-free portions are specified by hovering the cursor over the gap-free portions (the white circle portions in FIG. 3). (4) The gap portions and gap-free portions recognized based on the specified brightness levels in the steps (2) and (3) are subjected to area measurement processing, and the area values of the gap portions and their total value and the area values of gap-free portions and their total value are determined. (5) The same procedures as in the steps (1) to (4) are carried out for 10 fields of view, and the resulting values from the 10 fields of view are averaged to determine the percentage of gaps. The gaps observed in the observation image at 200× magnification correspond to the gaps between the porous membrane portion and the porous support portion. The gaps in the porous membrane are so small that they can only be seen in an observation image taken at about 10000× magnification.

In the diaphragm for alkaline water electrolysis, the thickness ratio of the non-impregnated portion to the impregnated portion [(thickness of non-impregnated portion)/(thickness of impregnated portion)] is preferably 0.1 to 1.0. When the thickness ratio of the non-impregnated portion to the impregnated portion is within the above range, excellent gas permeability anisotropy can be obtained. To further enhance the gas permeability anisotropy, the thickness ratio of the non-impregnated portion to the impregnated portion is more preferably 0.2 to 0.9, still more preferably 0.3 to 0.8, further more preferably 0.4 to 0.7.

When the diaphragm for alkaline water electrolysis includes the impregnated portion formed of the porous support fully impregnated with the porous membrane and the non-impregnated portion formed only of the porous membrane, the thickness ratio of the non-impregnated portion to the impregnated portion can be calculated as follows. For each of the porous support and the diaphragm for alkaline water electrolysis, the thicknesses at random 10 points are measured using a digimatic micrometer (trade name: coolant proof micrometer MDC-PXT, available from Mitutoyo Corporation) and averaged. For example, in the case of the porous support fully impregnated with the porous membrane as shown in FIG. 1, the thickness of the non-impregnated portion can be calculated as follows. The thickness of the diaphragm for alkaline water electrolysis and the thickness of the porous support are determined, the thickness of the impregnated portion is assumed to be identical to the thickness of the porous support, and the thickness of the impregnated portion is subtracted from the thickness of the diaphragm for alkaline water electrolysis.

The diaphragm for alkaline water electrolysis may have any thickness, which may be appropriately selected to fit the size of equipment to be used or in terms of handleability, for example. In terms of the gas barrier properties, the ion permeability, or the strength of the diaphragm, the thickness is preferably 50 to 1000 µm, more preferably 100 to 500 µm, still more preferably 200 to 400 µm.

The diaphragm for alkaline water electrolysis preferably has a porosity of 20 to 80% by volume, more preferably 25 to 75% by volume, still more preferably 30 to 70% by volume. The diaphragm having a porosity within the above ranges can have excellent ion permeability and excellent gas barrier properties because the pores of the diaphragm are continuously filled with an electrolyte solution. The porosity can be determined as follows: the diaphragm for alkaline water electrolysis is immersed in an electrolyte solution overnight, and the mass of the diaphragm is measured before and after absorbing the electrolyte solution. The porosity can be specifically determined using the following equation. Porosity (vol%) = [(Mass of diaphragm after immersion - Mass of diaphragm before immersion) /Density of electrolyte solution] × 100

The porous membrane and the porous support constituting the diaphragm for alkaline water electrolysis are described.

### (Porous membrane)

The porous membrane contains an organic polymer resin and inorganic particles.

Examples of the organic polymer resin include fluororesin, olefin resin, and aromatic hydrocarbon resin.

Examples of the fluororesin include ethylene-tetrafluoroethylene copolymers, polyvinylidene fluoride, polyvinyl fluoride, vinylidene fluoride-hexafluoropropylene copolymers, tetrafluoroethylene-hexafluoropropylene copolymers, polytetrafluoroethylene, tetrafluoroethylene-perfluoro(alkyl vinyl ether) copolymers, polychlorotrifluoroethylene, and tetrafluoroethylene-hexafluoropropylene-vinylidene fluoride copolymers.

Examples of the olefin resin include polyethylene, polypropylene, polybutene, and polymethylpentene.

Examples of the aromatic hydrocarbon resin include polyethylene terephthalate, polybutylene terephthalate, polybutylene naphthalate, polystyrene, polysulfone, polyethersulfone, polyphenylene sulfide, polyphenylsulfone, polyarylate, polyetherimide, polyimide, and polyamide-imide.

In terms of excellent heat resistance, alkali resistance, and solubility in solvents, which are described below, the organic polymer resin is preferably aromatic hydrocarbon resin, more preferably includes at least one selected from the group consisting of polysulfone, polyethersulfone, and polyphenylsulfone, and still more preferably includes polysulfone. The organic polymer resin may include one or more of the above-described organic polymer resins.

The amount of the organic polymer resin is preferably 10 to 40% by mass, more preferably 15 to 35% by mass, still more preferably 20 to 30% by mass, in 100% by mass of the porous membrane.

Examples of the inorganic particles include particles of hydroxides or oxides of metals such as magnesium, zirconium, titanium, zinc, aluminum, and tantalum; particles of sulfates such as calcium sulfate, barium sulfate, zinc sulfate, and strontium sulfate; particles of nitrides such as titanium nitride, zirconium nitride, and hafnium nitride; and particles of carbides such as titanium carbide, zirconium carbide, and hafnium carbide. Of these, to further enhance ion permeability, the inorganic particles are preferably particles of metal hydroxides or metal oxides, more preferably include at least one selected from the group consisting of particles of zirconium oxide, particles of titanium oxide, particles of magnesium hydroxide, and particles of barium sulfate, still more preferably include at least one selected from the group consisting of particles of zirconium oxide and particles of magnesium hydroxide. The inorganic particles may include one or more of these inorganic particles.

The inorganic particles may or may not be subjected to surface treatment. An example of the surface treatment is a known surface treatment using a silane coupling agent, stearic acid, oleic acid, a phosphoric acid ester, or the like.

The inorganic particles may have any shape and may be amorphous, particulate, granular, plate-like such as flake-like or hexagonal plate-like, or fibrous. The inorganic particles are preferably particulate, plate-like, or fibrous because they are easily dispersed in a solution and a liquid to be applied is easily prepared. They are more preferably particulate or plate-like, still more preferably plate-like, particularly preferably flake-like, in terms of adhesion to the resin and ion permeability.

The inorganic particles preferably have an average particle size of 0.01 to 1.5 µm. When the inorganic particles have an average particle size within the above range, excellent ion permeability and gas barrier properties can be obtained. The average particle size of the inorganic particles is more preferably 0.1 to 1.0 µm, still more preferably 0.2 to 0.5 µm, to further enhance ion permeability and gas barrier properties.

The average particle size is a volume average particle size (D50) determined by particle size distribution measurement by laser diffraction. Specifically, the particle size distribution is determined with a laser diffraction/scattering particle size distribution analyzer (Model: "LA-950" available from Horiba, Ltd.), and the median size (D50) in the volume-based particle size distribution is determined as the average particle size. The inorganic particles are mixed with a 0.2% by mass aqueous sodium hexametaphosphate solution and dispersed therein by ultrasonic irradiation to prepare a measurement sample. Specifically, the average particle size can be determined by the method described in EXAMPLES below.

The inorganic particles preferably have an aspect ratio of 1.0 to 8.0. When the aspect ratio of the inorganic particles is within the above range, excellent ion permeability and gas barrier properties can be obtained. To further enhance ion permeability and gas barrier properties, the aspect ratio of the inorganic particles is more preferably 2.0 to 8.0, still more preferably 2.5 to 7.0, further more preferably 3.0 to 6.0.

The aspect ratio herein means the ratio of the longest diameter (a) to the shortest diameter (b) [(a)/(b)]. The inorganic particles are observed by SEM to obtain an image, and the ratio [(a)/(b)] is measured for random 10 inorganic particles in the image using analysis software. The ratios [(a)/(b)] of the 10 inorganic particles are averaged to determine the aspect ratio of the inorganic particles. Usually, the shortest among the diameters perpendicular to the longest diameter is taken as the shortest diameter (b).

The inorganic particles preferably have a specific surface area of 5 to 35 m²/g. When the specific surface area of the inorganic particles is within the above range, excellent ion permeability can be obtained. The specific surface area of the inorganic particles is more preferably 5.5 to 25 m²/g, more preferably 6 to 20 m²/g. The specific surface area can be determined by measurement using a BET specific surface area meter, specifically, by the method described in the EXAMPLES below.

The amount of the inorganic particles in 100% by mass by mass of the porous membrane is preferably 60 to 95% by mass, more preferably 65 to 92% by mass, still more preferably 75 to 90% by mass.

The porous membrane preferably contains 10 to 60 parts by mass, more preferably 15 to 55 parts by mass, still more preferably 20 to 50 parts by mass of the organic polymer resin relative to 100 parts by mass of the inorganic particles. When the ratio of the organic polymer resin to the inorganic particles is within the above ranges, the diaphragm for alkaline water electrolysis has excellent ion permeability, gas barrier properties, heat resistance, and alkali resistance.

The thickness of the porous membrane is preferably 50 to 1000 µm, more preferably 100 to 500 µm, still more preferably 200 to 400 µm, to further enhance ion permeability, gas barrier properties, and strength.

### (Porous support)

The porous support is a porous member that serves as a support for the diaphragm for alkaline water electrolysis. The porous support is preferably a sheet-like member.

The porous support may be made of, for example, a resin such as polyethylene, polypropylene, polysulfone, polyethersulfone, polyphenylsulfone, polyphenylene sulfide, polyketone, polyimide, polyetherimide, or fluoroesin. Each of these may be used alone, or two or more of these may be used in combination. To provide excellent heat resistance and alkali resistance, the porous support preferably includes at least one resin selected from the group consisting of polypropylene, polyethylene, and polyphenylene sulfide, more preferably includes at least one resin selected from the group consisting of polypropylene and polyphenylene sulfide.

The porous support may be in the form of, for example, non-woven fabric, woven fabric, mesh, or porous membrane, or a fabric mixture of non-woven fabric and woven fabric. It is preferably non-woven fabric, woven fabric, or mesh, more preferably non-woven fabric or mesh, still more preferably non-woven fabric.

The porous support used in the present invention is preferably non-woven fabric, woven fabric, or mesh including at least one resin selected from the group consisting of polypropylene, polyethylene, and polyphenylene sulfide. The porous support is preferably non-woven fabric or mesh including polyphenylene sulfide.

When the porous support is a sheet-like support, the porous support may have any thickness that allows the diaphragm for alkaline water electrolysis of the present invention to exhibit the effects of the present invention. For example, the thickness is preferably 30 to 2000 µm, more preferably 50 to 1000 µm, still more preferably 80 to 250 µm.

When the porous support is a sheet-like support, it preferably has a mass per unit area of 20 to 200 g/m². When the mass per unit is within the above range, excellent ion permeability and gas barrier properties can be obtained. The mass per unit area of the porous support is more preferably 40 to 150 g/m², still more preferably 60 to 100 g/m².

### 2. Method for producing diaphragm for alkaline water electrolysis

The diaphragm for alkaline water electrolysis of the present invention can be produced, for example, by non-solvent induced phase separation including the following steps (1) to (4).
(1) A step of preparing a porous membrane-forming composition
(2) A step of applying the porous membrane-forming composition to a porous support
(3) A step of contacting the porous support after the application with a non-solvent
(4) A step of drying the porous support after the contact

The following describes these steps.

The step (1) involves preparing a porous membrane-forming composition. The porous membrane-forming composition is prepared by mixing the above organic polymer resin, the inorganic particles, a solvent, and a nonionic surfactant. The mixing may be performed by any method. For example, first, a resin solution is prepared by dissolving the organic polymer resin in a solvent and a dispersion (slurry) is prepared by dispersing the inorganic particles in a solvent, and then they are mixed with a nonionic surfactant.

The solvent may be any one capable of dissolving the organic polymer resin, and examples thereof include N-methyl-2-pyrrolidone, N,N-dimethylacetamide, N,N-dimethylformamide, and dimethyl sulfoxide. Each of these solvents may be used alone or a mixture of two or more of these may be used.

The amount of the organic polymer resin in the resin solution is preferably, but not limited to, 10 to 50% by mass, more preferably 15 to 45% by mass, still more preferably 20 to 40% by mass.

The amount of the inorganic particles in the dispersion is preferably, but not limited to, 20 to 80% by mass, more preferably 30 to 70% by mass, still more preferably 40 to 60% by mass.

The dispersion may further contain a dispersant to enhance the dispersibility of the inorganic particles. Examples of the dispersant include known dispersants such as polyester phosphate, polyvinylpyrrolidone, and polyacrylic acid.

When the resin solution or the dispersion is prepared or when they are mixed, known devices can be used, such as a mixer, a bead mill, a ball mill, a jet mill, a disperser, a sand mill, a roll mill, a pot mill, and a paint shaker.

The resin solution and the dispersion are preferably mixed so that the amount of the organic polymer resin relative to 100 parts by mass of the inorganic particles is 10 to 60 parts by mass, more preferably 15 to 55 parts by mass, still more preferably 20 to 50 parts by mass.

Examples of the nonionic surfactant include glycerin fatty acid esters, sorbitan fatty acid esters, polyoxyethylene alkyl ethers, and polyoxyalkylene derivatives. Each of these solvents may be used alone or a mixture of two or more of these may be used. When the porous membrane-forming composition contains the nonionic surfactant, water easily diffuses into the impregnated portion in the step (3). This facilitates the formation of gaps having a size of 0.5 to 10 µm between the porous membrane portion and the porous support portion in the impregnated portion.

The step (2) involves applying the porous membrane-forming composition obtained in the step (1) to a porous support.

The composition may be applied by, but not limited to, die coating, spin coating, gravure coating, curtain coating, spraying, or a method using an applicator, a coater, or a known device.

The amount of the porous membrane-forming composition to be applied may be, but not limited to, an amount that allows the porous support to be fully impregnated with the porous membrane-forming composition. For example, when a sheet-like porous support is used, preferably, the porous support is impregnated with the porous membrane-forming composition by applying the porous membrane-forming composition to one surface of the porous support and allowing the composition to reach the other surface of the porous support.

The step (3) involves contacting the porous support to which the porous membrane-forming composition was applied in the step (2) with a non-solvent. Contacting the porous support to which the porous membrane-forming composition was applied with a non-solvent allows the non-solvent to diffuse into the applied porous membrane-forming composition and allows the organic polymer resin, which is not soluble in the non-solvent, to coagulate. On the other hand, the solvent in the porous membrane-forming composition, which is soluble in the non-solvent, dissolves into the non-solvent. Owing to the occurrence of such phase separation, the organic polymer resin coagulates to form a membrane containing inorganic particles and having pores (porous membrane).

The porous support may be brought into contact with a non-solvent, for example, by immersing the porous support into the non-solvent (coagulation bath).

The non-solvent may be any solvent that does not substantially dissolve the organic polymer resin, and examples thereof include water (ion exchange water); lower alcohols such as methanol, ethanol, and propyl alcohol; and mixtures of these solvents. Preferred among these is water in terms of economic efficiency and liquid waste disposal. In addition to the above components, the non-solvent may contain a small amount of the same solvent as the solvent contained in the applied composition.

The porous support is preferably brought into contact with a non-solvent as soon as possible after the application because this facilitates the formation of gaps of the above-described size between the porous membrane portion and the porous support portion. If the time after the application until the contact of the porous support with the non-solvent is long, the surface of the applied composition may coagulate before the porous support is brought into contact with the non-solvent. This makes it difficult for the non-solvent to penetrate into the applied composition, thereby making it difficult to form a porous membrane having a desired structure. The time after the application until the contact of the porous support with the non-solvent is preferably 20 seconds or shorter. This facilitates the formation of gaps having a size of 0.5 to 10 µm between the porous membrane portion and the porous support portion in the impregnated portion.

The step (4) involves drying the porous support that was brought into contact with the non-solvent in the step (3). The applied composition coagulated in the step (3) is dried to remove the non-solvent. Thereby, a porous membrane can be obtained.

The drying can be performed by any known method. The drying temperature is preferably 60°C to 150°C, more preferably 70°C to 140°C. The drying time is preferably 0.5 to 120 minutes, more preferably 1 to 60 minutes, still more preferably 1 to 30 minutes.

As described above, the diaphragm for alkaline water electrolysis of the present invention can be simply produced by the steps (1) to (4).

### 3. Alkaline water electrolysis cell

The present invention also encompasses an alkaline water electrolysis cell including an anode, a cathode, and the diaphragm for alkaline water electrolysis between the anode and the cathode. In the alkaline water electrolysis cell, a compartment where the anode is present is an anode chamber and a compartment where the cathode is present is a cathode chamber, with the anode chamber and the cathode chamber being separated by the alkaline water electrolysis diaphragm. Alkaline water electrolysis produces oxygen gas on the anode side (anode chamber) and hydrogen gas on the cathode side (cathode chamber).

The anode and cathode each may be a known electrode that contains a conductive substrate containing, for example, nickel or a nickel alloy.

Since the diaphragm for alkaline water electrolysis of the present invention has gas permeability anisotropy, water electrolysis performed while adjusting the orientation of the diaphragm for alkaline water electrolysis according to the target product gas can increase the purity of the target product gas. For example, in the case of the diaphragm for alkaline water electrolysis in which one of the pair of main surfaces is defined by the impregnated portion formed of the porous support impregnated with the porous membrane and the other surface is defined by the non-impregnated portion, the purity of the target product gas can be increased as follows. When water electrolysis is performed, with the diaphragm disposed so that the main surface defined by the impregnated portion is oriented toward the anode, the permeation of oxygen gas from the anode side to the cathode side is suppressed, and thus, the purity of hydrogen gas produced at the cathode can be increased. On the other hand, when water electrolysis is performed, with the diaphragm disposed so that the main surface defined by the impregnated portion is oriented toward the cathode, the permeation of hydrogen gas from the cathode side to the anode side is suppressed, and thus, the purity of oxygen gas produced at the anode can be increased.

### 4. Method of alkaline water electrolysis

The present invention also encompasses a method of alkaline water electrolysis using an alkaline water electrolysis cell including the diaphragm for alkaline water electrolysis of the present invention. The alkaline water electrolysis cell includes an anode, a cathode, and a diaphragm for alkaline water electrolysis between the anode and the cathode. The diaphragm for alkaline water electrolysis includes a porous support and a porous membrane containing an organic polymer resin and inorganic particles, and includes an impregnated portion formed of the porous support impregnated with the porous membrane and has a pair of main surfaces. The impregnated portion includes gaps having a size of 0.5 to 10 µm between the porous membrane portion and the porous support portion. The diaphragm for alkaline water electrolysis has a gas permeability anisotropy that indicates a difference between the gas permeability from one to the other of the pair of main surfaces and the gas permeability from the other to the one of the pair of main surfaces. Using such an alkaline water electrolysis cell, alkaline water electrolysis is performed while adjusting the orientation of the diaphragm for alkaline water electrolysis according to the target product gas among the gases produced in the anode side and the cathode side.

The method of alkaline water electrolysis of the present invention may be any known method. For example, the method of alkaline water electrolysis may include filling the alkaline water electrolysis cell with an electrolyte solution and applying a current to the electrolyte solution.

The electrolyte solution may be an alkaline aqueous solution in which an electrolyte such as potassium hydroxide or sodium hydroxide is dissolved. The concentration of the electrolyte in the electrolyte solution is preferably, but not limited to, 20 to 40% by mass to further enhance the electrolysis efficiency. The temperature of the electrolysis is preferably 50°C to 120°C, more preferably 80°C to 90°C to further enhance the ion conductivity of the electrolyte solution and further enhance the electrolysis efficiency.

The current may be applied under known conditions and by a known method, and usually has a current density of 0.2 A/cm² or higher, preferably 0.3 A/cm² or higher. The higher the applied current density, the more hydrogen and oxygen can be obtained in a short time, so that hydrogen can be efficiently produced. If, however, the current density is too high, the product hydrogen and the product oxygen adhere to the ion-permeable membrane or electrodes to inhibit the reaction, and the overvoltage increases due to the electrode reaction resistance. These cause an increase in electrolysis voltage and an increase in the amount of power required for electrolysis, leading to poor electrolytic efficiency. In response to this, the current density is preferably adjusted to be high so that the electrolysis voltage is about 2 V, **e.g.,** within the range of 1.5 to 2.5 **V.**

### EXAMPLES

Hereinafter, the present invention is described in more detail based on the examples which, however, are not intended to limit the scope of the present invention.

In the EXAMPLES, the physical properties and the like were measured under the following conditions.

### <Average particle size of inorganic particles>

Inorganic particles (powder) were mixed with a 0.2% by mass aqueous sodium hexametaphosphate solution and dispersed therein using an ultrasonic cleaner to obtain an inorganic particle dispersion. The particle size distribution of the inorganic particle dispersion was measured using a laser diffraction/scattering particle size distribution analyzer (trade name: "LA-950", available from Horiba, Ltd.), with the red laser transmittance being adjusted to 90% to 98% and the blue laser transmittance being adjusted to 85% to 92%. The median diameter (d50) in the obtained volume-based particle size distribution was taken as the average particle size (µm) of the inorganic particles.

### <Specific surface area of inorganic particles>

The specific surface area of the inorganic particles was measured using a BET specific surface area analyzer (trade name: Macsorb HM model-1210, available from Mountec **Co.,** Ltd.). Specifically, 1 g of the inorganic particles (powder) was placed in a cell as a measurement sample, and degassing was performed at 200°C while nitrogen gas was passed through the cell. After the degassing, the cell was immersed in liquid nitrogen while nitrogen gas was passed through the cell, so that nitrogen was adsorbed onto the measurement sample at a temperature of -196°C. Then, the cell was allowed to stand at room temperature, and the amount of nitrogen released was measured to determine the specific surface area by the BET method. The measurement was carried out three times for each sample, and the resulting values were averaged to determine the specific surface area (m²/g) of the inorganic particles.

### <Aspect ratio of inorganic particles>

The inorganic particles (powder) were observed with a FE-SEM (trade name: JSM-7600F, available from JEOL Ltd.) to obtain an observation image at 20,000× magnification. For random 10 particles in the image, the ratio a/b of the longest diameter a to the shortest diameter b of each particle was measured using analysis software (trade name: Image-Pro Premier, Media Cybernetics, Inc.), and the resulting ratios were averaged to determine the aspect ratio of the inorganic particles.

### <Thickness>

The thickness of the porous support and the thickness of the obtained diaphragm for alkaline water electrolysis were measured using a digimatic micrometer (trade name: Coolant Proof Micrometer MDC-PXT, available from Mitutoyo Corporation). Measurements were performed at random 10 points, and the resulting values were averaged to determine the thickness. The thickness of the impregnated portion of the diaphragm for alkaline water electrolysis was assumed to be identical to the thickness of the porous support, and the thickness of the non-impregnated portion was calculated by subtracting the thickness of the impregnated portion from the thickness of the diaphragm after impregnation.

### <Gap size between porous membrane portion and porous support portion>

Of the two main surfaces of the obtained diaphragm for alkaline water electrolysis, the main surface with no non-impregnated portion was observed at random 10 fields of view with a FE-SEM (trade name: JSM-7600F, available from JEOL Ltd.) to obtain observation images (magnification: 1,000×). Each observation image was analyzed using analysis software (trade name: Image-Pro Premier, Media Cybernetics, Inc.) to identify the porous membrane portion, the porous support portion, and the gaps. Thereafter, line segments perpendicular to a surface of the porous support portion were drawn at 10 µm intervals along the surface of the porous support portion observed to be fibrous, from the surface of the porous support portion to a surface of the porous membrane portion. The lengths of all the line segments were measured, and were averaged to determine the gap size between the porous support portion and the porous membrane portion in one field of view. The same procedure was carried out for the remaining 9 fields of view, and the sizes in the 10 fields of view were averaged to determine the gap size between the porous support portion and the porous membrane portion.

### <Percentage of gap between porous membrane portion and porous support portion on surface of diaphragm>

Of the two main surfaces of the obtained diaphragm for alkaline water electrolysis, the main surface with no non-impregnated portion was observed at random 10 fields of view with a FE-SEM (trade name: JSM-7600F, available from JEOL Ltd.) to obtain observation images (magnification: 200×). The obtained observation images of the surface was analyzed using analysis software (trade name: Image-Pro Premier, Media Cybernetics, Inc.). First, brightness levels of five areas identified as gaps and brightness levels of five areas identified as the porous membrane portion were specified according to the analyst's judgment. Then, the portions that matched the specified brightness levels were extracted by processing using analysis software, the areas of the gaps were automatically calculated, and the percentage of the areas of the gaps to the total area of the observation field was calculated to obtain the percentage of gaps in one field of view. The same procedure was carried out for the remaining 9 fields of view, and the resulting values from the 10 fields of view were averaged to determine the percentage of gaps between the porous support portion and the porous membrane portion.

### <Evaluation of alkaline water electrolysis)

An alkaline water electrolysis test was performed using a diaphragm for alkaline water electrolysis in an alkaline water electrolysis cell with the following cell configuration under the following electrolysis conditions to measure the gas purity and the permeation amounts of hydrogen and oxygen. Specifically, the gas purity in the anode chamber and the gas purity in the cathode chamber were first measured under the condition that the impregnated portion of the diaphragm was oriented to the anode electrode (orientation condition A), and then measured under the condition that the impregnated portion of the diaphragm was oriented to the cathode electrode (orientation condition B). The method for measuring the gas purity is described later.

### - Cell configuration, electrolysis conditions

The cell components include an anode (Ni mesh substrate coated with Ni-Co oxide) and a cathode (Ni mesh substrate coated with Ru-Ln oxide) each with an electrode area of 27.8 cm², current collectors, end plates, a chamber block, and joints. The cell had a zero-gap configuration in which the anode and the cathode are pressed against the diaphragm for alkaline water electrolysis using the spring structure of the current collectors. During electrolysis, a 30% by mass aqueous potassium hydroxide solution was circulated at 20 mL/min in both the anode chamber and the cathode chamber. In this case, the electrolyte solution is circulated and supplied through completely separate systems on the anode and cathode sides. Such a structure prevents mixing of the electrolyte solution on the anode side and the electrolyte solution on the cathode side in the reservoir or piping system. The temperature of the electrolyte solution on both the anode and cathode sides was 80°C, and the outlets of the pipes were open to atmospheric pressure. The structure was designed such that both the anode and cathode are at the same pressure by incorporating a water bridge between the anode pipe and the cathode pipe after the gas-liquid separation. The electrolysis conditions include application of a constant current density from 1.0 A/cm² to 0.2 A/cm², in steps of 0.2 A/cm². The waiting periods at the respective constant current densities were 2 hours at 1.0 A cm⁻², 3 hours at 0.8 A cm⁻², 4 hours at 0.6 A cm⁻², 5 hours at 0.4 A cm⁻², and 8 hours at 0.2 A cm⁻². The gas purity was measured using gas chromatography immediately after the waiting period and every 30 minutes thereafter, repeating the measurement 4 to 5 times until the gas purity values stabilized.

### <Gas purity>

The alkaline water electrolysis cell including the obtained diaphragm for alkaline water electrolysis was measured for the purity of oxygen gas from the anode and hydrogen gas from the cathode as the gases produced during alkaline water electrolysis. Specifically, to remove water vapor from the gases obtained from the electrolytic cell outlet pipes through the gas-liquid separators, each gas was passed through the water removal piping system to be cooled to 0°C to 1°C. Then, the purity of the oxygen gas and the purity of hydrogen gas were measured by gas chromatography (trade name: GC-2014A, available from Shimadzu Corporation).

### (Example 1)

### <Preparation of inorganic particle dispersion>

First, 100 parts by mass of magnesium hydroxide particles (plate-like, average particle size: 0.36 µm, specific surface area: 10 m²/g, aspect ratio: 4.7), 60 parts by mass of N-methyl-2-pyrrolidone (Mitsubishi Chemical Corporation), and 3 parts by mass of polyester phosphate were mixed and dispersed for 30 minutes using a bead mill with zirconia beads. Then, the zirconia beads were removed to obtain a magnesium hydroxide particle dispersion.

### <Preparation of porous membrane-forming composition>

First, 200 parts by mass of the obtained magnesium hydroxide particle dispersion, 100 parts by mass of a polysulfone resin solution in which a polysulfone resin (trade name: Ultrason S3010, available from BASF) was dissolved in N-methyl-2-pyrrolidone (Mitsubishi Chemical Corporation) at a concentration of 35% by mass, and 1 part by mass of sorbitan monooleate were mixed at room temperature for 10 minutes using a planetary centrifugal mixer (trade name: Thinky Mixer (Awatori Rentaro) ARE-500, available from Thinky Corporation) at a rotation speed of 1000 min⁻¹. Then, the mixture was filtered through a stainless steel mesh to obtain a porous membrane-forming composition.

### <Formation of diaphragm>

A nonwoven fabric (mass per unit area: 100 g/m², thickness: 190 µm) made of polyphenylene sulfide fiber was impregnated with the porous membrane-forming composition by applying the porous membrane-forming composition to one surface of the nonwoven fabric with an applicator (application amount: 28 mg/cm²) and allowing the composition to reach the other surface. Fifteen seconds after the application, the nonwoven fabric impregnated with the porous membrane-forming composition was immersed in a water bath for three minutes at room temperature to obtain a hydrated membrane including magnesium hydroxide particles, polysulfone resin, and the nonwoven fabric. The obtained membrane was dried in a dryer at 80°C for 30 minutes to obtain a diaphragm for alkaline water electrolysis. The obtained diaphragm for alkaline water electrolysis had a thickness of 260 µm, consisting of a non-impregnated portion of 70 µm and an impregnated portion of 190 µm. The gap size between the porous membrane portion and the nonwoven fabric portion in the diaphragm was 2.6 µm, and the percentage of gaps was 2%.

### <Evaluation of alkaline water electrolysis>

Under the orientation condition A and at a current density of 1000 mA/cm², the oxygen gas concentration in the cathode chamber was 0.00 vol% and the hydrogen gas concentration in the anode chamber was 0.12 vol%. Under the orientation condition B and at the same current density, the oxygen gas concentration in the cathode chamber was 0.21 vol% and the hydrogen gas concentration in the anode chamber was 0.02 vol%.

### (Example 2)

### <Preparation of inorganic particle dispersion>

First, 200 parts by mass of barium sulfate particles (plate-like, average particle size 0.90 µm, specific surface area: 5 m²/g, aspect ratio 5.2), 150 parts by mass of N,N-dimethylacetamide (Mitsubishi Gas Chemical Company, Inc.), and 5 parts by mass of polyvinylpyrrolidone were mixed and dispersed for 30 minutes using a bead mill with zirconia beads. Then, the zirconia beads were removed to obtain a barium sulfate particle dispersion.

### <Preparation of porous membrane-forming composition>

First, 200 parts by mass of the obtained barium sulfate particle dispersion, 100 parts by mass of a polyethersulfone resin solution in which a polyethersulfone resin (trade name: Ultrason E3010, available from BASF) was dissolved in N,N-dimethylacetamide (Mitsubishi Gas Chemical Company, Inc.) at a concentration of 35% by mass, and 2 parts by mass of sorbitan monooleate were mixed at room temperature for about 10 minutes using a planetary centrifugal mixer (trade name: Thinky Mixer (Awatori Rentaro) ARE-500, available from Thinky Corporation) at a rotation speed of 1000 min⁻¹. Then, the mixture was filtered through a stainless steel mesh to obtain a porous membrane-forming composition.

### <Formation of diaphragm>

A nonwoven fabric (mass per unit area: 60 g/m², thickness: 130 µm) made of polyphenylene sulfide fiber was impregnated with the porous membrane-forming composition by applying the porous membrane-forming composition to one surface of the nonwoven fabric with an applicator (application amount: 20 mg/cm²) and allowing the composition to reach the other surface. Ten seconds after the application, the nonwoven fabric impregnated with the porous membrane-forming composition was immersed in a water bath for three minutes at room temperature to obtain a hydrated membrane including barium sulfate particles, polyethersulfone resin, and the nonwoven fabric. The obtained membrane was dried in a dryer at 80°C for 30 minutes to obtain a diaphragm for alkaline water electrolysis. The obtained diaphragm for alkaline water electrolysis had a thickness of 145 µm, consisting of a non-impregnated portion of 15 µm and an impregnated portion of 130 µm. The gap size between the porous membrane portion and the nonwoven fabric portion in the diaphragm was 0.6 µm, and the percentage of gaps was 1%.

### <Evaluation of alkaline water electrolysis>

Under the orientation condition A, the oxygen gas concentration in the cathode chamber was 0.01 vol% and the hydrogen gas concentration in the anode chamber was 0.08 vol%. Under the orientation condition B, the oxygen gas concentration in the cathode chamber was 0.13 vol% and the hydrogen gas concentration in the anode chamber was 0.02 vol%.

### (Example 3)

### <Preparation of inorganic particle dispersion>

First, 200 parts by mass of zirconium oxide particles (spherical, average particle size 0.02 µm, specific surface area: 25 m²/g, aspect ratio 1.1), 150 parts by mass of N-methyl-2-pyrrolidone (Mitsubishi Chemical Corporation), and 5 parts by mass of polyacrylic acid were mixed and dispersed for 30 minutes using a bead mill with zirconia beads. Then, the zirconia beads were removed to obtain a zirconium oxide particle dispersion.

### <Preparation of porous membrane-forming composition>

First, 200 parts by mass of the obtained zirconium oxide particle dispersion, 100 parts by mass of a polyphenylsulfone resin solution in which a polyphenylsulfone resin (trade name: Ultrason P3010, available from BASF) was dissolved in N-methyl-2-pyrrolidone (Mitsubishi Chemical Corporation) at a concentration of 35% by mass, and 5 parts by mass of sorbitan monolaurate were mixed at room temperature for about 10 minutes using a planetary centrifugal mixer (trade name: Thinky Mixer (Awatori Rentaro) ARE-500, available from Thinky Corporation) at a rotation speed of 1000 min⁻¹. Then, the mixture was filtered through a stainless steel mesh to obtain a porous membrane-forming composition.

### <Formation of diaphragm>

A nonwoven fabric (mass per unit area: 80 g/m², thickness: 160 µm) made of polypropylene fiber was impregnated with the porous membrane-forming composition by applying the porous membrane-forming composition to one surface of the nonwoven fabric with an applicator (application amount: 76 mg/cm²) and allowing the composition to reach the other surface. Twenty seconds after the application, the nonwoven fabric impregnated with the porous membrane-forming composition was immersed in a water bath for three minutes at room temperature to coagulate the applied composition, thereby obtaining a hydrated membrane. The obtained membrane was dried in a dryer at 80°C for 30 minutes to obtain a diaphragm for alkaline water electrolysis. The obtained diaphragm for alkaline water electrolysis had a thickness of 310 µm, consisting of a non-impregnated portion of 150 µm and an impregnated portion of 160 µm. The gap size between the porous membrane portion and the nonwoven fabric portion in the diaphragm was 9.5 µm, and the percentage of gaps was 8%.

### <Evaluation of alkaline water electrolysis>

Under the orientation condition A, the oxygen gas concentration in the cathode chamber was 0.03 vol% and the hydrogen gas concentration in the anode chamber was 0.24 vol%. Under the orientation condition B, the oxygen gas concentration in the cathode chamber was 0.28 vol% and the hydrogen gas concentration in the anode chamber was 0.03 vol%.

### Example 4

### <Preparation of inorganic particle dispersion>

First, 200 parts by mass of zirconium oxide particles (spherical, average particle size 0.36 µm, specific surface area: 10 m²/g, aspect ratio 1.1), 150 parts by mass of N-methyl-2-pyrrolidone (Mitsubishi Chemical Corporation), and 6 parts by mass of polyester phosphate were mixed and dispersed for 30 minutes using a bead mill with zirconia beads. Then, the zirconia beads were removed to obtain a zirconium oxide particle dispersion.

### <Preparation of porous membrane-forming composition>

First, 200 parts by mass of the obtained zirconium oxide particle dispersion, 100 parts by mass of a polysulfone resin solution in which a polysulfone resin (trade name: Ultrason S3010, available from BASF) was dissolved in N-methyl-2-pyrrolidone (Mitsubishi Chemical Corporation) at a concentration of 35% by mass, and 5 parts by mass of sorbitan monolaurate were mixed at room temperature for about 10 minutes using a planetary centrifugal mixer (trade name: Thinky Mixer (Awatori Rentaro) ARE-500, available from Thinky Corporation) at a rotation speed of 1000 min⁻¹. Then, the mixture was filtered through a stainless steel mesh to obtain a porous membrane-forming composition.

### <Formation of diaphragm>

A nonwoven fabric (mass per unit area: 100 g/m², thickness: 190 µm) made of polyphenylene sulfide fiber was impregnated with the porous membrane-forming composition by applying the porous membrane-forming composition to one surface of the nonwoven fabric with an applicator (application amount: 45 mg/cm²) and allowing the composition to reach the other surface. Twenty seconds after the application, the nonwoven fabric impregnated with the porous membrane-forming composition was immersed in a water bath for three minutes at room temperature to coagulate the applied composition, thereby obtaining a hydrated membrane. The obtained membrane was dried in a dryer at 80°C for 30 minutes to obtain a diaphragm for alkaline water electrolysis. The obtained diaphragm for alkaline water electrolysis had a thickness of 260 µm, consisting of a non-impregnated portion of 70 µm and an impregnated portion of 190 µm. The gap size between the porous membrane portion and the nonwoven fabric portion in the diaphragm was 2.4 µm, and the percentage of gaps was 2%.

### <Evaluation of alkaline water electrolysis>

Under the orientation condition A, the oxygen gas concentration in the cathode chamber was 0.02 vol% and the hydrogen gas concentration in the anode chamber was 0.25 vol%. Under the orientation condition B, the oxygen gas concentration in the cathode chamber was 0.25 vol% and the hydrogen gas concentration in the anode chamber was 0.04 vol%.

### (Comparative Example 1)

### <Preparation of inorganic particle dispersion>

First, 200 parts by mass of zirconium oxide particles (spherical, average particle size 0.02 µm, specific surface area: 25 m²/g, aspect ratio 1.1), 100 parts by mass of N-methyl-2-pyrrolidone (Mitsubishi Chemical Corporation), and 2 parts by mass of polyvinylpyrrolidone were mixed and dispersed for 30 minutes using a bead mill with zirconia beads. Then, the zirconia beads were removed to obtain a zirconium oxide particle dispersion.

### <Preparation of porous membrane-forming composition>

First, 200 parts by mass of the obtained zirconium oxide particle dispersion and 100 parts by mass of a polysulfone resin solution in which a polysulfone resin (trade name: Ultrason S3010, available from BASF) was dissolved in N-methyl-2-pyrrolidone (Mitsubishi Chemical Corporation) at a concentration of 35% by mass were mixed at room temperature for about 10 minutes using a planetary centrifugal mixer (trade name: Thinky Mixer (Awatori Rentaro) ARE-500, available from Thinky Corporation) at a rotation speed of 1000 min⁻¹. Then, the mixture was filtered through a stainless steel mesh to obtain a porous membrane-forming composition.

### <Formation of diaphragm>

A nonwoven fabric (mass per unit area: 100 g/m², thickness: 90 µm) made of polyphenylene sulfide fiber was impregnated with the porous membrane-forming composition by applying the porous membrane-forming composition to one surface of the nonwoven fabric with an applicator (application amount: 59 mg/cm²) and allowing the composition to reach the other surface. Sixty seconds after the application, the nonwoven fabric impregnated with the porous membrane-forming composition was immersed in a water bath for three minutes at room temperature to coagulate the applied composition, thereby obtaining a hydrated membrane. The obtained membrane was dried in a dryer at 80°C for 30 minutes to obtain a diaphragm for alkaline water electrolysis. The obtained diaphragm for alkaline water electrolysis had a thickness of 240 µm, consisting of a non-impregnated portion of 150 µm and an impregnated portion of 90 µm. The gap size between the porous membrane portion and the nonwoven fabric portion in the diaphragm was 0.2 µm, and the percentage of gaps was 0.5%.

### <Evaluation of alkaline water electrolysis>

Under the orientation condition A, the oxygen gas concentration in the cathode chamber was 0.21 vol% and the hydrogen gas concentration in the anode chamber was 0.22 vol%. Under the orientation condition B, the oxygen gas concentration in the cathode chamber was 0.25 vol% and the hydrogen gas concentration in the anode chamber was 0.20 vol%.

As described above, when water electrolysis was performed using the diaphragms for alkaline water electrolysis of the examples, the concentration of the product oxygen gas or the product hydrogen gas changed depending on the orientation conditions. This confirmed that the diaphragms for alkaline water electrolysis of the examples have gas permeability anisotropy and demonstrated that the purity of the target product gas can be increased by changing the orientation of the diaphragm.

### REFERENCE SIGNS LIST

- 1: diaphragm for alkaline water electrolysis
- 2: porous membrane
- 3: porous support
- 4: impregnated portion
- 5: non-impregnated portion
- 6: gap
- 7: line segment

## Claims

1. A diaphragm for alkaline water electrolysis, comprising:
a porous membrane containing an organic polymer resin and inorganic particles; and
a porous support,
the diaphragm for alkaline water electrolysis including an impregnated portion formed of the porous support impregnated with the porous membrane,
the diaphragm for alkaline water electrolysis having a pair of main surfaces,
the impregnated portion including a gap having a size of 0.5 to 10 µm between a porous membrane portion and a porous support portion,
the diaphragm for alkaline water electrolysis having a gas permeability anisotropy that indicates a difference between a gas permeability from one to the other of the pair of main surfaces and a gas permeability from the other to the one of the pair of main surfaces.

2. A diaphragm for alkaline water electrolysis, comprising:
a porous membrane containing an organic polymer resin and inorganic particles; and
a porous support,
the diaphragm for alkaline water electrolysis including an impregnated portion formed of the porous support impregnated with the porous membrane and a non-impregnated portion formed of the porous membrane not impregnated into the porous support,
the diaphragm for alkaline water electrolysis having a pair of main surfaces,
the impregnated portion defining one of the pair of main surfaces,
the non-impregnated portion defining the other of the pair of main surfaces,
the impregnated portion including, in the one main surface, a gap having a size of 0.5 to 10 µm between a porous membrane portion and a porous support portion.

3. The diaphragm for alkaline water electrolysis according to claim 1 or 2,
wherein a percentage of the gap between the porous membrane portion and the porous support portion in the surface of the diaphragm for alkaline water electrolysis is 1% or higher and 8% or lower.

4. The diaphragm for alkaline water electrolysis according to any one of claims 1 to 3, comprising the non-impregnated portion formed of the porous membrane not impregnated into the porous support,
wherein a thickness ratio of the non-impregnated portion to the impregnated portion [(thickness of non-impregnated portion)/(thickness of impregnated portion)] is 0.1 to 1.0.

5. The diaphragm for alkaline water electrolysis according to any one of claims 1 to 4,
wherein the organic polymer resin comprises at least one selected from the group consisting of polysulfone, polyethersulfone, and polyphenylsulfone.

6. The diaphragm for alkaline water electrolysis according to any one of claims 1 to 5,
wherein the inorganic particles comprise at least one selected from the group consisting of zirconium oxide, titanium oxide, magnesium hydroxide, and barium sulfate.

7. The diaphragm for alkaline water electrolysis according to any one of claims 1 to 6,
wherein the porous support comprises at least one resin selected from the group consisting of polypropylene, polyethylene, and polyphenylene sulfide.

8. An alkaline water electrolysis cell comprising:
an anode;
a cathode; and
the diaphragm for alkaline water electrolysis according to any one of claims 1 to 7 between the anode and the cathode.

9. A method of alkaline water electrolysis,
the method using the alkaline water electrolysis cell according to claim 8,
the method including water electrolysis performed while adjusting an orientation of the diaphragm for alkaline water electrolysis according to a target gas among gases produced on an anode side and a cathode side.
